(19) Europäisches Patentamt
European Patent Office
Office européen des brevets

(11) Veröffentlichungsnummer: **0 493 693 B1**

(12) **EUROPÄISCHE PATENTSCHRIFT**

(45) Veröffentlichungstag der Patentschrift: **05.04.95**

(51) Int. Cl.[6]: **B01D 17/04**, C10M 175/04

(21) Anmeldenummer: **91120703.3**

(22) Anmeldetag: **02.12.91**

# (54) Spaltung von Wasser-in-Öl-Emulsionen.

(30) Priorität: **14.12.90 DE 4040022**

(43) Veröffentlichungstag der Anmeldung:
**08.07.92 Patentblatt 92/28**

(45) Bekanntmachung des Hinweises auf die Patenterteilung:
**05.04.95 Patentblatt 95/14**

(84) Benannte Vertragsstaaten:
**AT BE CH DE ES FR GB IT LI NL SE**

(56) Entgegenhaltungen:
**EP-A- 0 055 434**
**DE-A- 3 706 151**
**FR-A- 2 507 613**
**US-A- 2 499 370**
**US-A- 4 209 422**

(73) Patentinhaber: **BAYER AG**

**D-51368 Leverkusen (DE)**

(72) Erfinder: **Augustin, Thomas, Dr.**
**Ritterstrasse 59**
**W-5000 Köln 1 (DE)**
Erfinder: **Kehlenbach, Rolf**
**Heimstättenweg 37**
**W-5060 Bergisch Gladbach 2 (DE)**

**EP 0 493 693 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Verfahren zur Spaltung von Wasser-in-Öl-Emulsionen, bei denen es sich um die Ölphase handelt, die in einer Primärspaltung aus fett- und/oder ölhaltigen Abwässern oder aus gebrauchten Öl-in-Wasser-Emulsionen erhalten wurde. Im folgenden wird die Spaltung der Öl-in-Wasser-Emulsion auch als Primärspaltung und die Spaltung der dabei erhaltenen Ölphase als Sekundärspaltung bezeichnet.

Für die Primärspaltung von Öl-in-Wasser-Emulsionen sind verschiedene Verfahren und entsprechende organische und anorganische Spalter bekannt. Häufig wird zur Primärspaltung ein wasserlösliches Polymer eingesetzt, wobei im allgemeinen kationische Produkte gegenüber anionischen und nichtionischen Produkten bevorzugt werden.

Beispiele für Primärspalter sind:
Synthetische Polymere auf der Basis von Acrylamid, wobei reines Polyacrylamid nichtionisch, Copolymere von Acrylamid und Acrylat anionisch und Copolymere aus Acrylamid und kationischen Monomeren oder Oligomeren kationisch sind (siehe z.B. US-A-35 85 148, US-A-46 99 951, DE-A-23 45 922 und DE-A-29 26 103), weiterhin
synthetische Polymere auf der Basis von Polyaminen und Polyamidaminen, sowie quarternierte Polyamine und quarternierte Polyamidamine (siehe z.B. DE-A-22 62 284, JA-A-20 929-66, US-A-3 915 904, DE-A-26 38 516, US-A-42 87 331, FR-A-1 449 204, US-A-45 75 527, DE-A-21 56 215 und DE-A-23 51 754), weiterhin
Homopolymerisate von Dimethyldiallylammoniumchlorid, auch als DADMAC bezeichnet (siehe z.B. EP-A-0 186 029) und
anorganische Spaltmittel, wie anorganische Metallsalze, z.B. von Magnesium, Natrium, Calcium, Eisen, Silicium, Aluminium und Cer, die in Form von Hydroxiden, Oxiden, Chloriden oder Sulfaten eingesetzt werden können. Entsprechend der Schulze-Hardy-Regel werden dabei bevorzugt 2- und 3-wertige Salze eingesetzt (siehe Kirk-Othmer, Encyclopedia of Chemical Technology, 3. Edition, Vol. 10, 489, New York 1980).

Bei der Primärspaltung fällt in der Regel die Ölphase in Form eines auf der Wasserphase aufrahmenden Flotates an, welches im allgemeinen eine Wasser-in-Öl-Emulsion ist. Diese kann von der Flüssigkeitsoberfläche auf einfache Weise mechanisch entfernt und anschließend der Sekundärspaltung zugeführt werden.

Eine Sekundärspaltung ist im allgemeinen dann vorteilhaft, wenn man die aus der Abfall-Öl-in-Wasser-Emulsion abgetrennte Ölphase entsorgen will, z.B. durch Aufarbeiten, Deponieren oder Verbrennen. Dann ist es günstig, wenn diese Ölphase möglichst wenig Wasser enthält.

Für die Spaltung von Rohölemulsionen, bei denen es sich um Wasser-in-Öl-Emulsionen handelt, ist es bekannt, daß man Blockpolymere aus Ethylenoxid und/oder 1,2-Propylenoxid (siehe US-A-29 64 478), oxalkylierte Phenolharze (siehe US-A-24 99 370 und US-A-24 99 368) und mit Diisocyanaten, Dicarbonsäuren, Formaldehyd und/oder Diglycidylether vernetzte Block- oder Mischpolymere von Ethylen- und 1,2-Propylenoxid (siehe EP-A-55 433 und 55 434, sowie US-A-40 29 708) und Polyetherurethane (siehe DE-A-37 06 151) als Spalter einsetzen kann.

Die erfindungsgemäß durchzuführende Sekundärspaltung, d.h. die Spaltung einer Wasser-in-Öl-Emulsion, bei der es sich um die Ölphase aus der Spaltung einer Öl-in-Wasser-Emulsion handelt, kann mit der Spaltung einer Rohölemulsion nicht verglichen werden, weil die bei der Rohölförderung auftretenden Wasser-in-Öl-Emulsionen durch spezifische native Emulgatoren stark stabilisiert sind. Die für die Spaltung von Rohölemulsionen eingesetzten Spalter wurden speziell für diese Spaltung konzipiert. Bei der erfindungsgemäßen Emulsionsspaltung enthalten die zu spaltenden Emulsionen keine oder völlig andere Stabilisatoren, als Rohölemulsionen.

Deshalb können Spalter, die bei der Spaltung von Rohölemulsionen bekannt sind, an sich nicht auf die Sekundärspaltung von Ölphasen übertragen werden, die aus einer Spaltung einer Öl-in-Wasser-Emulsion stammen.

Es wurde nun ein Verfahren zur Spaltung von Wasser-in-Öl-Emulsionen, bei denen es sich um die Ölphase handelt, die in einer Primärspaltung aus fett- und/oder ölhaltigen Abwässern oder aus gebrauchten Öl-in-Wasser-Emulsionen erhalten wurde, gefunden, bei dem man Polymere und/oder Oligomere aus Ethylenoxid und/oder 1,2-Propylenoxid, oxalkylierte Phenolharze, mit Diisocyanaten, Dicarbonsäuren, Formaldehyd und/oder Diglycidylether vernetzte Block-oder Mischpolymere von Ethylen- und 1,2-Propylenoxid, Polyetherurethane und/oder Alkylbenzolsulfonsäuresalze in einer Menge von 600 bis 18.000 ppm als Spalter einsetzt.

Für das erfindungsgemäße Verfahren geeignete Polymere von Ethylen- und/oder 1,2-Propylenoxid kann man beispielsweise durch Polyalkoxylierung niederer Alkohole, wie Methanol, Ethanol, Propanolen, Butanolen, Pentanolen oder Hexanolen, mit Ethylen- und/oder 1,2-Propylenoxid erhalten. Als Alkohole kommen hierbei auch Di- und Polyole in Frage, z.B. Propandiole, Butandiole, Neopentylglykol, andere Pentandiole, Adipol, Hexandiole, Cyclohexandiole, 1,4-Dihydroxymethylcyclohexan, Perhydrobisphenol A, Glycerin, Trimethylolethan, Trimethylolpropan, andere Hexantriole und Pentaerythrit. Auch niedere Amine, z.B. Ethylendiamin und Diethylentriamin können mit Ethylenoxid und/oder 1,2-Propylenoxid polyoxyalkyliert werden, um für die vorliegende Erfindung geeignete Polymere zu erhalten. Es können sowohl Blockpolymere als auch Polymere mit statistischer Verteilung verschiedener Oxyalkylgruppen, sogenannte Mischpolymere, oder auch Mischformen dieser beiden Möglichkeiten erfindungsgemäß verwendet werden. Bevorzugt sind Blockpolymere aus Ethylen-und 1,2-Propylenoxid und solche Produkte, bei denen Alkohole zunächst mit einer Mischung aus Propylenoxid und 70 bis 90 Gew.-% der gesamten des Menge des Ethylenoxids zu Mischpolymeren umgesetzt werden und hierauf die restlichen 10 bis 30 Gew.-% des Ethylenoxids eingebracht werden, so daß ein Polyether entsteht, der praktisch nur primäre OH-Endgruppen enthält. Bevorzugt sind Polymere von Ethylen- und 1,2-Propylenoxid, die 40 bis 60 Gew.-% Ethylen, bezogen auf die Summe Ethylenoxid + 1,2-Propylenoxid enthalten. Besonders bevorzugte Polyether sind aus gleichen Gewichtsmengen Ethylen- und 1,2-Propylenoxid aufgebaut. Bevorzugt sind weiterhin Polyether mit Molekulargewichten von 600 bis 6000, besonders bevorzugt solche mit Molekulargewichten von 1000 bis 5000.

Für das erfindungsgemäße Verfahren geeignete oxalkylierte Phenolharze kann man beispielsweise durch Kondensation von Alkylphenolen mit Formaldehyd, Formalinlösung oder Paraformaldehyd und anschließender Alkoxylierung erhalten.

Für das erfindungsgemäße Verfahren geeignete, mit Diisocyanaten, Dicarbonsäuren, Formaldehyd und/oder Diglycidylethern vernetzte Block- oder Mischpolymere von Ethylen- und/oder 1,2-Propylenoxid kann man z.B. erhalten, wenn man einen difunktionellen Polyether, bestehend aus z.B. 30 bis 90 Gew.-Teilen 1,2-Propylenoxid und 70 bis 10 Gew.-Teilen Ethylenoxid und einem mittleren Molekulargewicht von 2000 bis 20 000, mit einem bifunktionellen Isocyanat, einer bifunktionellen Carbonsäure, Formaldehyd und/oder einem bifunktionellen Glycidylether umsetzt. Beispiele für geeignete Diisocyanate sind Hexamethylendiisocyanat, Cyclohexan-1,4-diisocyanat, 2,4-und 2,6-Toluylendiisocyanat und deren Gemische, 1-Isocyanatomethyl-5-isocyanato-1,3,3-trimethylcyclohexan, 2,2,4- und 2,4,4-Trimethylhexamethylendiisocyanat-1,6, 1,5-Naphthalindiisocyanat, 1,3-Cyclopentylendiisocyanat, m- und p-Phenylen-diisocyanat, 1,3- und 1,4-Xylylendiisocyanat, 3,3'-Dimethyl-4,4'-diphenylmethandiisocyanat, 4,4'-Diphenylmethan-diisocyanat, 3,3'-Dimethylbiphenylendiisoayanat, 4,4'-Biphenylendiisocyanat, Durendiisocyanat, 1-Phenoxy-2,4'-phenylendiisocyanat, 1-tert.-Butyl-2,4-phenylendiisocyanat, Methylen-bis-4,4'-cyclohexyldiisocyanat, 1-Chlor-2,4-phenylendiisocyanat und 4,4'-Diphenyletherdiisocyanat. Beispiele für geeignete Bisglycidylether des Bisphenols A sind Reaktionsprodukte von Bisphenol A und Epichlorhydrin, Reaktionsprodukte von Epichlorhydrin und Anilin und Reaktionsprodukte von Perhydrophthalsäure mit Epichlorhydrin. Beispiele für geeignete difunktionelle Carbonsäuren sind Oxalsäure, Malonsäure, Bernsteinsäure, Glutarsäure, Adipinsäure, Pimelinsäure, Suberinsäure, Maleinsäure, Fumarsäure und höhere gesättigte oder ungesättigte Dicarbonsäuren.

Für das erfindungsgemäße Verfahren geeignete vernetzte Block- oder Mischpolymere von Ethylen- und/oder 1,2-Propylenoxid sind beispielsweise verknüpfte und aminmodifizierte Polyalkylenoxide der allgemeinen Formel (I)

$$\begin{array}{l} NH\text{-}CHR\text{-}(CH_2)_x\text{-}CHR\text{-}[\text{-}OCHR\text{-}(CH_2)_x\text{-}CHR\text{-}]_y\text{-}(OCHR\text{-}CHR)_y\text{-}O\text{-}Q\text{-}A \\ | \\ M \\ | \\ NH\text{-}CHR\text{-}(CH_2)_x\text{-}CHR\text{-}[\text{-}OCHR\text{-}(CH_2)_x\text{-}CHR\text{-}]_y\text{-}(OCHR\text{-}CHR)_y\text{-}O\text{-}Q\text{-}A \end{array}$$

(I),

in der

| | |
|---|---|
| jedes R | unabhängig voneinander Wasserstoff oder einen $C_1$-$C_{20}$-Alkylrest bedeutet, |
| jedes x | unabhängig voneinander Null oder eine ganze Zahl von 1 bis 12 bedeutet, |
| jedes y | unabhängig voneinander Null oder eine ganze Zahl von 1 bis 120 bedeutet, |
| jedes Q | unabhängig voneinander eine $C_6$-$C_{18}$-Arylen-, $C_7$-$C_{18}$-Aralkylen- oder $C_2$-$C_{18}$-Alkylengruppe bedeutet, |

jedes A unabhängig voneinander Wasserstoff, Hydroxyl oder einen Rest der Formel (II)

$$-(OCHR-CHR)_y-[-OCHR-(CH_2)_x-CHR-]_y-OCHR-(CH_2)_x-CHR-NH_2 \quad (II),$$

mit R, x und Y wie oben angegeben bedeutet und

M den Rest eines Diisocyanats, eines Bisepoxids, einer Dicarbonsäure, eines Dicarbonsäuredihalogenids, eines Biscarbonsäureanhydrids, eines Diesters oder einer Dihalogenverbindung bedeutet, nachdem jeweils beide reaktive Gruppen mit einem Amin-Wasserstoffatom reagiert haben.

Bevorzugte vernetzte Block- und/oder Mischpolymere von Ethylen- und/oder 1,2-Propylenoxid kann man erhalten, indem man monofunktionelle Polymere von Ethylen- und/oder 1,2-Propylenoxid, mit Diisocyanaten, Bisglycidylethern oder Dicarbonsäuren, z.B. den weiter oben beschriebenen, umsetzt, und anschließend mit einem Polyalkylenpolyamin reagieren läßt.

Für das erfindungsgemäße Verfahren geeignete Polyetherurethane sind beispielsweise Harnstoff-modifizierte Polyetherurethane der Formel (III)

$$\begin{array}{l}
NH-CO-NH-R_3-[-NH-CO-O-(CHR_6-CHR_7O)_x-(CHR_8-CHR_9-O)_y-R_{10}]_m \\
| \\
R_1 \\
| \\
N-CO-NH-R_4-[-NH-CO-O-(CHR_6-CHR_7O)_x-(CHR_8-CHR_9-O)_y-R_{10}]_m \\
| \\
R_2 \\
| \\
NH-CO-NH-R_5-[-NH-CO-O-(CHR_6-CHR_7O)_x-(CHR_8-CHR_9-O)_y-R_{10}]_m
\end{array}$$

(III)

in der

| | |
|---|---|
| $R_1$ und $R_2$ | unabhängig voneinander $C_2$-$C_{14}$-Cycloalkylen bedeuten, |
| $R_3$, $R_4$ und $R_5$ | unabhängig voneinander gegebenenfalls substituiertes Alkylen, Cycloalkylen oder Arylen bedeuten, |
| $R_6$, $R_7$, $R_8$ und $R_9$ | unabhängig voneinander Wasserstoff oder $C_1$-$C_{20}$-Alkyl bedeuten, |
| $R_{10}$ | $C_1$-$C_{18}$-Alkyl, $C_6$-$C_{18}$-Aryl, $C_7$-$C_{18}$-Aralkyl oder $C_2$-$C_{18}$-Alkenyl bedeutet und |
| n | für die Zahlen 0 bis 50, |
| m | für die Zahlen 1 bis 4, |
| x | für die Zahlen 5 bis 100 und |
| y | für die Zahlen 0 bis 100 stehen. |

Bevorzugte Polyetherurethane entstehen durch Umsetzung von Polymeren von Ethylen- und/oder 1,2-Propylenoxid, die wie oben beschrieben erhalten wurden, mit einem bifunktionellen Isocyanat, wie es oben für die Herstellung vernetzter Block- oder Mischpolymere beschrieben ist, und einem Polyalkylenpolyamin.

Es können auch polyharnstoffmodifizierte Polyetherpolyurethane eingesetzt werden, die aus beispielsweise Ethylendiamin, Diethylentriamin, Triethylentetramin, Tetraethylenpentamin, Pentaethylenhexamin, Polyethylenimin, 1,2- und 1,3-Propylendiamin, Dipropylentriamin, Tripropylentetramin, Butylendiamin, Hexamethylendiamin, 2,5-Diamino-2,5-dimethylhexan, 2,2,4- und 2,4,4-Trimethyl-1,6-hexandiamin, Cyclohexandiamin, Isophorondiamin, hydrierten Toluylendiaminen und hydrierten Diaminodiphenylmethanen hergestellt wurden.

Bevorzugt sind dabei Polyamine, die tri- und höherfunktionell sind. Diethylentriamin, Triethylentetramin, Tetraethylenpentamin und Pentaethylenhexamin sind besonders bevorzugt.

Gut geeignet für die Herstellung erfindungsgemäß verwendbarer polyharnstoffmodifizierter Polyurethane sind auch technische Destillationsrückstände aus der Herstellung der genannten Oligoethylenamine. Diese Rückstände enthalten dann zusätzlich verzweigte und/oder cyclische Polyalkylenpolyamine.

Für das erfindungsgemäße Verfahren geeignete Alkylbenzolsulfonsäuresalze sind z.B. Salze von Alkylbenzolsulfonsäuren und Alkylnaphthalinsulfonsäuren. Besonders bevorzugt sind Salze von Dodecylbenzolsulfonsäure.

Es ist möglich und teilweise vorteilhaft ein Gemisch von 2 oder mehreren der erfindungsgemäß einzusetzenden Spalter zu verwenden.

Die erfindungsgemäß zu verwendenden Spalter werden in einer Menge von 600 bis 18 000 ppm, bezogen auf die zu spaltende Emulsion eingesetzt. Vorzugsweise beträgt diese Menge 600 bis 10 000 ppm.

Bei den erfindungsgemäß zu spaltenden Wasser-in-Öl-Emulsionen handelt es sich um die Ölphase, die in einer Primärspaltung aus fett- und/oder ölhaltigen Abwässern oder aus gebrauchten Öl-in-Wasser-Emulsionen erhalten wurde.

Als Beispiele seien genannt: Mineralölbasische und teilsynthetische Kühl-, Schmier- und Walzölemulsionen, Tankreinigungsabwässer, Bilgenwässer, Slopöle, ölhaltige Waschlaugen, zu entsorgende Entfettungsbäder, Lackierereiabwässer, ölhaltige Kondensate und Abwässer aus der Verarbeitung von tierischen und pflanzlichen Produkten, von Brauereien und Brennereien, aus Metallbe- und -verarbeitungsbetrieben, aus Membranprozessen, z.B. Retentate aus Ultrafiltrationen und Umkehrosmose-Verfahren, und aus Flotationen.

Das erfindungsgemäße Verfahren kann beispielsweise bei Temperaturen im Bereich von 0 bis 100 °C durchgeführt werden. Vorzugsweise arbeitet man im Bereich von 10 bis 80 °C.

Das erfindungsgemäße Verfahren gestattet durch Sekundärspaltung die weitgehende Entwässerung von Ölphasen, die aus der Spaltung der oben genannten Öl-in-Wasser-Emulsionen erhalten wurden. In der Regel können auf die erfindungsgemäße Weise 60 bis 90 Gew.-% des in Ölphasen enthaltenen Wassers abgetrennt werden. So behandelte Ölphasen können leichter aufgearbeitet, verbrannt und besser deponiert werden als direkt aus der Spaltung von Öl-in-Wasser-Emulsionen stammende, noch relativ stark wasserhaltige Ölphasen, die z.B. 20 bis 80 Gew.-% Wasser enthalten.

## Beispiele

In den Beispielen wurden folgende Sekundärspalter verwendet:

### Ethylenoxid/1,2-Propylenoxid-Polymere

A1

Durch Alkoxylierung von Trimethylolpropan (als Starter) mit zunächst 80 Gew.-Teilen Propylenoxid und anschließend 20 Gew.-Teilen Ethylenoxid wurde ein Polyether mit einer OH-Zahl von 28 erhalten. Das Produkt wurde mit Toluol auf einen Wirkstoffgehalt von 45 Gew.-% eingestellt. Es wurde eine niederviskose, nahezu farblose klare Lösung erhalten.

A2

Durch Alkoxylierung von Ethylendiamin mit zunächst 88 Gew.-Teilen Propylenoxid und anschließend 12 Gew.-Teilen Ethylenoxid wurde ein Polyether mit einer OH-Zahl von 47 erhalten. Das Produkt wurde mit Toluol auf einen Wirkstoffgehalt von 45 Gew.-% eingestellt. Es wurde eine niederviskose, nahezu farblose klare Lösung erhalten.

### Oxalkylierte Phenolharze

B1

220 Gew.-Teile Nonylphenol und 37 Gew.-Teile wäßrige Formaldehydlösung wurden erwärmt und mit 4,5 Gew.-Teilen 56 %iger Natronlauge zu einem Grundharz umgesetzt, wobei entstandenes Wasser abdestilliert wurde. Danach wurden 103 Gew.-Teile des Grundharzes mit 1,4 Gew.-Teilen gepulvertem KOH versetzt, auf 148 °C aufgeheizt und mit 78 Gew.-Teilen Ethylenoxid umgesetzt. Nach dem Abkühlen wurde mit 3,5 Gew.-Teilen Essigsäure neutral gestellt.

Das erhaltene Produkt wurde mit Toluol auf einen Wirkstoffgehalt von 45 Gew.-% eingestellt. Es wurde eine klare, leicht gelbliche Lösung erhalten.

Vernetzte Polymere von Ethylen- und 1,2-Propylenoxid

C1

36 Gew.-Teile eines wie unter A2 beschrieben hergestellten, bifunktionellen Polyethers wurden mit 0,8 Gew.-Teilen Kalium-tert.-butylat und 1,56 Gew.-Teilen Toluylendiisocyanat bei 130 °C umgesetzt. Nach anschließender Neutralisation mit Essigsäure und Filtration wurde das Produkt mit Toluol auf einen Wirkstoffgehalt von 45 Gew.-% eingestellt.

C2

Es wurde verfahren wie bei C1, jedoch wurden anstelle von Toluylendiisocyanat 1,52 Gew.-Teile Bisglycidylether des Bisphenols A umgesetzt. Nach anschließender Neutralisation und Filtration wurde das Produkt mit Toluol auf einen Wirkstoffgehalt von 45 Gew.-% eingestellt.

Vernetzte Block- oder Mischpolymere von Ethylen- und/oder 1,2-Propylenoxid

D1

Zu 51,6 Gew.-Teilen Toluol wurden zwei verschiedene Lösungen getropft:

Lösung 1: 0,035 Gew.-Teile Toluylendiisocyanat in 22 Gew.-Teilen Toluol

Lösung 2: 7,6 Gew.-Teile Aminopolyether, bei dem es sich um ein Aminierungsprodukt von einem auf Trimethylolpropan gestartetem Polypropylenoxid mit einer OH-Zahl von 32 handelte, in 68,4 Teilen Toluol.

Die Lösungen wurden gleichzeitig mit gleicher Geschwindigkeit bei einer Temperatur im Bereich von 0 bis 5 °C zugetropft. Anschließend wurde 2 Stunden bei Raumtemperatur nachreagieren gelassen. Es wurde eine schwachgelbe Flüssigkeit erhalten.

Polyetherurethane

E1

In eine Lösung von 235,9 Gew.-Teilen eines Polyethers mit einer OH-Zahl von 21,4, der durch Umsetzung von Butanol mit gleichen Gewichtsmengen Ethylenoxid und Propylenoxid hergestellt worden war, wurden 15,7 Gew.-Teile Toluylendiisocyanat und 0,02 Gew.-Teile Dibutylzinndilaurat hinzugefügt und bei 50 °C gerührt bis der Polyether vollständig abreagiert war. Dies wurde über die Isocyanatzahl kontrolliert. Dann wurden bei 50 °C 3 Gew.-Teile Diethylentriamin hinzugefügt und 8 Stunden bei 30 °C nachreagieren gelassen. Es wurde eine schwachgelbe Flüssigkeit erhalten.

Alkylbenzolsulfonsäuresalze

F1

52 Gew.-Teile Dodecylbenzolsulfonsäure, 31 Gew.-Teile Xylol und 10 Gew.-Teile Butyldiglykol wurden bei 30 °C zusammengegeben und zu dieser Mischung 7 Gew.-Teile Diethylentriamin hinzugetropft. Das Produkt zeigte eine gelbliche Färbung.

Beispiel 1

Ein aus der Automobilfabrikation stammendes Abwasser, bei dem es sich um eine Öl-in-Wasser-Emulsion handelte, wurde durch Zusatz von 0,1 Gew.-% eines Polyamidamins primär gespalten. Die dabei erhaltene Ölphase, die noch 40 Gew.-% Wasser enthielt, wurde bei Raumtemperatur unter Verwendung von 0,9 Gew.-% eines Sekundärspalters gespalten. Der Sekundärspalter bestand aus einem Gemisch aus A1, B1 und C1 im Gewichtsverhältnis 1,2:2:2. Nach 2/4/8/16 Stunden waren 16/20/35/50 Gew.-% des in der abgetrennten Ölphase vorhandenen Wassers abgeschieden. Eine Blindprobe, d.h. stehenlassen einer Probe der Ölphase ohne Sekundärspalter-Zusatz zeigte nach 16 Stunden keine Wasserabscheidung.

Beispiel 2

Ein aus der Automobilfabrikation stammendes Abwasser, bei dem es sich um eine Öl-in-Wasser-Emulsion handelte, wurde mit 0,09 Gew.-% eines Polyamidamins primär gespalten. Die erhaltene Ölphase, die noch 44 Gew.-% Wasser enthielt, wurde bei Raumtemperatur mit verschiedenen Sekundärspaltern in verschiedenen Dosierungen gespalten. Die Ergebnisse sind aus Tabelle 1 ersichtlich. Eine Blindprobe, d.h. stehenlassen einer Probe der abgetrennten Ölphase ohne Sekundärspalter-Zusatz zeigte nach 16 Stunden keine Wasserabscheidung.

**Tabelle 1**

| Sekundärspalter (bei Mischungen ist das Gew.-Verhältnis angegeben) | Dosierung (Gew.-%) | Wasserabscheidung (Gew.-% des vorhandenen Wassers) nach 0,5 | 1 | 8 | 16 Stunden |
|---|---|---|---|---|---|
| A1 | 0,6 | 25 | 30 | 31 | 31 |
| A2 | 0,6 | 29 | 29 | 30 | 30 |
| B1 | 0,8 | 10 | 21 | 28 | 30 |
| A1 + A2 1,2:2 | 0,8 | 20 | 20 | 23 | 23 |
| B1 + F1 1:2,5 | 0,8 | 20 | 20 | 22 | 22 |

Beispiel 3

Es wurde verfahren wie in Beispiel 2, jedoch wurden zum Teil andere Dosierungen gewählt und die Sekundärspaltung bei einer Temperatur von 60 °C durchgeführt. Die erhaltenen Ergebnisse sind aus

Tabelle 2 ersichtlich. Eine Blindprobe, d.h. stehenlassen einer Probe der Ölphase ohne Sekundärspalter-Zusatz zeigte nach 1 Stunde keine Wasserabscheidung.

Tabelle 2

| Sekundärspalter (bei Mischungen ist das Gew.-Verhältnis angegeben) | Dosierung (Gew.-%) | Wasserabscheidung nach 1 Stunde (Gew.-% des vorhandenen Wassers) |
|---|---|---|
| A1 | 0,6 | 40 |
| A1 + A2 1,2:2 | 0,6 | 39 |
| B1 + F1 1:2,5 | 0,6 | 40 |

Beispiel 4

Ein aus der Automobilfabrikation stammendes Abwasser, bei dem es sich um eine Öl-in-Wasser-Emulsion handelte, wurde mit 0,2 Gew.-% eines Polyamins primär gespalten. Die dabei erhaltene Ölphase, die noch 52 Gew.-% Wasser enthielt, wurde bei 80 °C unter Verwendung von verschiedenen Sekundärspaltern gespalten. Die Ergebnisse sind aus Tabelle 3 ersichtlich. Eine Blindprobe, d.h. das stehenlassen einer

Probe der Ölphase ohne Sekundärspalter-Zusatz zeigte nach 2 Stunden keine Wasserabscheidung.

Tabelle 3

| Sekundärspalter (bei Mischungen ist das Gew.-Verhältnis angegeben) | Dosierung (Gew.-%) | Wasserabscheidung nach 2 Stunden (Gew.-% des vorhandenen Wassers) |
|---|---|---|
| B1 | 1 | 19,2 |
| B1 + F1 1,5:3,5 | 1 | 67,3 |
| F1 | 1 | 38,5 |

Beispiel 5

Ein aus der Stahlproduktion stammendes Abwasser, bei dem es sich um eine Öl-in-Wasser-Emulsion handelte, wurde mit 0,18 Gew.-% eines Polyamidamins primär gespalten. Die dabei erhaltene Ölphase, die noch 72 Gew.-% Wasser enthielt, wurde bei Raumtemperatur unter Verwendung von jeweils 1,0 Gew.-% verschiedener Sekundärspalter gespalten. Die Ergebnisse sind in Tabelle 4 ersichtlich. Eine Blindprobe, d.h. das stehenlassen einer Probe der Ölphase ohne Sekundärspalter-Zusatz zeigte nach 14 Stunden keine Wasserabscheidung.

Tabelle 4

| Sekundärspalter (bei Mischungen ist das Gew.-Verhältnis angegeben) | Wasserabscheidung nach x Stunden (Gew.-% des vorhandenen Wassers) | |
|---|---|---|
| | x = 1 | x = 14 |
| A1 | 59 | 60 |
| B1 | 72 | 76 |
| A1 + F1 1:1 | 83 | 94 |
| B1 + F1 1:2,5 | 72 | 90 |

Beispiel 6

Eine Öl-in-Wasser-Abfallemulsion aus dem Bereich der Altölaufbereitung wurde mit 0,4 Gew.-% eines Polyamins primär gespalten. Die dabei erhaltene Ölphase, die noch 72 Gew.-% Wasser enthielt, wurde bei 40°C unter Verwendung von 1,0 Gew.-% verschiedener Sekundärspalter gespalten. Die Ergebnisse sind aus Tabelle 5 ersichtlich.

Tabelle 5

| Sekundärspalter | Wasserabscheidung nach x Stunden (Gew.-% des vorhandenen Wassers) | | | |
|---|---|---|---|---|
| | x = 1 | x = 3 | x = 5 | x = 12 |
| A1 | 11 | 18 | 21 | 25 |
| A2 | 11 | 65 | 71 | 83 |
| C2 | 0 | 0 | 60 | 60 |

Beispiel 7

Es wurde verfahren wie in Beispiel 4, jedoch wurden als Sekundärspalter die Typen C1, D1 und E1 eingesetzt. Die Ergebnisse sind aus Tabelle 6 ersichtlich.

Tabelle 6

| Sekundärspalter | Wasserabscheidung nach x Stunden (Gew.-% des vorhandenen Wassers) | | | |
|---|---|---|---|---|
| | x = 1 | x = 3 | x = 5 | x = 12 |
| C1 | 4 | 7 | 9 | 10 |
| D1 | 2 | 6 | 13 | 16 |
| E1 | 5 | 11 | 20 | 25 |

## Patentansprüche

1. Verfahren zur Spaltung von Wasser-in-Öl-Emulsionen, bei denen es sich um die Ölphase handelt, die in einer Primärspaltung aus fett- und/oder ölhaltigen Abwässern oder aus gebrauchten Öl-in-Wasser-Emulsionen erhalten wurde, bei dem man Polymere und/oder Oligomere aus Ethylenoxid und/oder 1,2-Propylenoxid, oxalkylierte Phenolharze, mit Diisocyanaten, Dicarbonsäuren, Formaldehyd und/oder Diglycidylether vernetzte Block- oder Mischpolymere von Ethylen- und 1,2-Propylenoxid, Polyetherurethane und/oder Alkylbenzolsulfonsäuresalze in einer Menge von 600 bis 18.000 ppm als Spalter einsetzt.

2. Verfahren nach Anspruch 1, dadurch gekennzeichnet, daß man als Polymere aus Ethylenoxid und/oder 1,2-Propylenoxid durch Polyalkoxylierung niederer Alkohole oder niederer Amine erhaltene Polymere einsetzt.

3. Verfahren nach Anspruch 1, dadurch gekennzeichnet, daß man als oxyalkylierte Phenolharze solche einsetzt, die durch Kondensation von Alkylphenolen mit Formaldehyd, Formalinlösung oder Paraformaldehyd und anschließender Alkoxylierung erhalten worden sind.

4. Verfahren nach Anspruch 1, dadurch gekennzeichnet, daß man als mit Diisocyanaten, Dicarbonsäuren, Formaldehyd und/oder Diglycidylether vernetzte Block- oder Mischpolymere von Ethylen- und 1,2-Propylenoxid solche einsetzt, die man erhält, wenn man einen difunktionellen Polyether, bestehend aus 30 bis 90 Gew.-Teilen 1,2-Propylenoxid und 70 bis 10 Gew.-Teilen Ethylenoxid mit einem mittleren Molekulargewicht von 2000 bis 20 000 mit einem bifunktionellen Isocyanat, einer bifunktionellen Carbonsäure, Formaldehyd und/oder einem bifunktionellen Glycidylether umsetzt.

5. Verfahren nach Anspruch 1, dadurch gekennzeichnet, daß man als Polyetherurethane Harnstoff-modifizierte Polyetherurethane der Formel (III)

$$NH-CO-NH-R_3-[-NH-CO-O-(CHR_6-CHR_7O)_x-(CHR_8-CHR_9-O)_y-R_{10}]_m$$
|
$R_1$
|
$$N-CO-NH-R_4-[-NH-CO-O-(CHR_6-CHR_7O)_x-(CHR_8-CHR_9-O)_y-R_{10}]_m$$
|
$R_2$
|
$$NH-CO-NH-R_5-[-NH-CO-O-(CHR_6-CHR_7O)_x-(CHR_8-CHR_9-O)_y-R_{10}]_m$$

(III)

in der

| | |
|---|---|
| $R_1$ und $R_2$ | unabhängig voneinander $C_2$-$C_{14}$-Cycloalkylen bedeuten, |
| $R_3$, $R_4$ und $R_5$ | unabhängig voneinander gegebenenfalls substituiertes Alkylen, Cycloalkylen oder Arylen bedeuten, |
| $R_6$, $R_7$, $R_8$ und $R_9$ | unabhängig voneinander Wasserstoff oder $C_1$-$C_{20}$-Alkyl bedeuten, |

| | |
|---|---|
| $R_{10}$ | $C_1$-$C_{18}$-Alkyl, $C_6$-$C_{18}$-Aryl, $C_7$-$C_{18}$-Aralkyl oder $C_2$-$C_{18}$-Alkenyl bedeutet und |
| n | für die Zahlen 0 bis 50, |
| m | für die Zahlen 1 bis 4, |
| x | für die Zahlen 5 bis 100 und |
| y | für die Zahlen 0 bis 100 stehen, |

einsetzt.

**6.** Verfahren nach Anspruch 1, dadurch gekennzeichnet, daß man als Polymere aus Ethylenoxid und/oder 1,2-Propylenoxid verknüpfte und amin-modifizierte Polyalkylenoxide der allgemeinen Formel (I)

```
NH-CHR-(CH2)x-CHR-[-OCHR-(CH2)x-CHR-]y-(OCHR-CHR)y-O-Q-A
|
M
|
NH-CHR-(CH2)x-CHR-[-OCHR-(CH2)x-CHR-]y-(OCHR-CHR)y-O-Q-A
```

(I),

in der

| | |
|---|---|
| jedes R | unabhängig voneinander Wasserstoff oder einen $C_1$-$C_{20}$-Alkylrest bedeutet, |
| jedes x | unabhängig voneinander Null oder eine ganze Zahl von 1 bis 12 bedeutet, |
| jedes y | unabhängig voneinander Null oder eine ganze Zahl von 1 bis 120 bedeutet, |
| jedes Q | unabhängig voneinander eine $C_6$-$C_{18}$-Arylen-, $C_7$-$C_{18}$-Aralkylen- oder $C_2$-$C_{18}$-Alkylengruppe bedeutet, |
| jedes A | unabhängig voneinander Wasserstoff, Hydroxyl oder einen Rest der Formel (II) |

$$-(OCHR-CHR)_y-[-OCHR-(CH_2)_x-CHR-]_y-OCHR-(CH_2)_x-CHR-NH_2 \quad (II),$$

mit R, x und Y wie oben angegeben bedeutet und

M den Rest eines Diisocyanats, eines Bisepoxids, einer Dicarbonsäure, eines Dicarbonsäuredihalogenids, eines Biscarbonsäureanhydrids, eines Diesters oder einer Dihalogenverbindung bedeutet, nachdem jeweils beide reaktive Gruppen mit einem Amin-Wasserstoffatom reagiert haben,

einsetzt.

**7.** Verfahren nach Ansprüchen 1 bis 6, dadurch gekennzeichnet, daß man es bei Temperaturen im Bereich 0 bis 100 °C durchführt.

## Claims

**1.** Process for the breaking of water-in-oil emulsions which are the oily phase which has been obtained in a primary breaking from effluents containing fat and/or oil or from used oil-in-water emulsions, in which polymers and/or oligomers of ethylene oxide and/or 1,2-propylene oxide, oxyalkylated phenolic resins, block polymers or copolymers of ethylene oxide and 1,2-propylene oxide crosslinked with diisocyanates, dicarboxylic acids, formaldehyde and/or diglycidyl ethers, polyether-urethanes and/or alkylbenzenesulphonic acid salts in an amount of 600 to 18,000 ppm are employed as the breakers.

**2.** Process according to Claim 1, characterised in that polymers obtained by polyalkoxylation of lower alcohols or lower amines are employed as the polymers of ethylene oxide and/or 1,2-propylene oxide.

**3.** Process according to Claim 1, characterised in that the oxyalkylated phenolic resins employed are those which have been obtained by condensation of alkylphenols with formaldehyde, formalin solution or paraformaldehyde and subsequent alkoxylation.

**4.** Process according to Claim 1, characterised in that the block polymers or copolymers of ethylene oxide and 1,2-propylene oxide crosslinked with diisocyanates, dicarboxylic acids, formaldehyde and/or

diglycidyl ethers which are employed are those which are obtained when a difunctional polyether which consists of 30 to 90 parts by weight of 1,2-propylene oxide and 70 to 10 parts by weight of ethylene oxide and have an average molecular weight of 2000 to 20,000 are reacted with a bifunctional isocyanate, a bifunctional carboxylic acid, formaldehyde and/or a bifunctional glycidyl ether.

**5.** Process according to Claim 1, characterised in that urea-modified polyether-urethanes of the formula (III)

$$\begin{array}{l}
NH\text{-}CO\text{-}NH\text{-}R_3\text{-}[\text{-}NH\text{-}CO\text{-}O\text{-}(CHR_6\text{-}CHR_7O)_x\text{-}(CHR_8\text{-}CHR_9\text{-}O)_y\text{-}R_{10}]_m \\
| \\
R_1 \\
| \\
N\text{-}CO\text{-}NH\text{-}R_4\text{-}[\text{-}NH\text{-}CO\text{-}O\text{-}(CHR_6\text{-}CHR_7O)_x\text{-}(CHR_8\text{-}CHR_9\text{-}O)_y\text{-}R_{10}]_m \\
| \\
R_2 \\
| \\
NH\text{-}CO\text{-}NH\text{-}R_5\text{-}[\text{-}NH\text{-}CO\text{-}O\text{-}(CHR_6\text{-}CHR_7O)_x\text{-}(CHR_8\text{-}CHR_9\text{-}O)_y\text{-}R_{10}]_m
\end{array}$$

(III)

in which

| | |
|---|---|
| $R_1$ and $R_2$ | independently of one another denote $C_2$-$C_{14}$-cycloalkylene, |
| $R_3$, $R_4$ and $R_5$ | independently of one another denote optionally substituted alkylene, cycloalkylene or arylene, |
| $R_6$, $R_7$, $R_8$ and $R_9$ | independently of one another denote hydrogen or $C_1$-$C_{20}$-alkyl, |
| $R_{10}$ | denotes $C_1$-$C_{18}$-alkyl, $C_6$-$C_{18}$-aryl, $C_7$-$C_{18}$-aralkyl or $C_2$-$C_{18}$-alkenyl and |
| n | represents a number from 0 to 50, |
| m | represents a number from 1 to 4, |
| x | represents a number from 5 to 100 and |
| y | represents a number from 0 to 100, |

are employed as the polyether-urethanes.

**6.** Process according to Claim 1, characterised in that linked and amine-modified polyalkylene oxides of the general formula (I)

$$\begin{array}{l}
NH\text{-}CHR\text{-}(CH_2)_x\text{-}CHR\text{-}[\text{-}OCHR\text{-}(CH_2)_x\text{-}CHR\text{-}]y\text{-}(OCHR\text{-}CHR)_y\text{-}O\text{-}Q\text{-}A \\
| \\
M \\
| \\
NH\text{-}CHR\text{-}(CH_2)_x\text{-}CHR\text{-}[\text{-}OCHR\text{-}(CH_2)_x\text{-}CHR\text{-}]y\text{-}(OCHR\text{-}CHR)_y\text{-}O\text{-}Q\text{-}A
\end{array}$$

(I)

in which

| | |
|---|---|
| each R | independently denotes hydrogen or a $C_1$-$C_{20}$-alkyl radical, |
| each x | independently denotes zero or an integer from 1 to 12, |
| each y | independently denotes zero or an integer from 1 to 120, |
| each Q | independently denotes a $C_6$-$C_{18}$-arylene, $C_7$-$C_{18}$-aralkylene or $C_2$-$C_{18}$-alkylene group, |
| each A | independently denotes hydrogen, hydroxyl or a radical of the formula (II) |

$$-(OCHR\text{-}CHR)_y\text{-}[\text{-}OCHR\text{-}(CH_2)_x\text{-}CHR\text{-}]_y\text{-}OCHR\text{-}(CH_2)_x\text{-}CHR\text{-}NH_2 \quad (II)$$

where R, x and Y are as defined above, and

M denotes the radical of a diisocyanate, a bisepoxide, a dicarboxylic acid, a dicarboxylic acid dihalide, a biscarboxylic acid anhydride, a diester or a dihalogen compound, after the two reactive groups in each case have reacted with an amine hydrogen atom,

are employed as the polymers of ethylene oxide and/or 1,2-propylene oxide.

**7.** Process according to Claims 1 to 6, characterised in that it is carried out at temperatures in the range from 0 to 100 °C.

## Revendications

**1.** Procédé pour rompre des émulsions eau-dans-l'huile consistant en la phase huileuse obtenue dans une rupture primaire d'eaux résiduaires contenant des matières grasses et/ou des huiles ou d'émulsions usées du type huile-dans-l'eau, dans lequel on utilise en tant qu'additifs de rupture des polymères et/ou oligomères de l'oxyde d'éthylène et/ou de l'oxyde de 1,2-propylène, des résines phénoliques oxyalkylées, des polymères séquencés ou copolymères de l'oxyde d'éthylène et de l'oxyde de 1,2-propylène réticulés par des diisocyanates, des acides dicarboxyliques, du formaldéhyde et/ou des éthers diglycidyliques, des polyétheruréthannes et/ou des sels d'acides alkylbenzènesulfoniques, en quantité de 600 à 18 000 ppm.

**2.** Procédé selon la revendication 1, caractérisé en ce que l'on utilise en tant que polymères de l'oxyde d'éthylène et/ou de l'oxyde de 1,2-propylène des polymères obtenus par polyalcoxylation d'alcools inférieurs ou d'amines inférieures.

**3.** Procédé selon la revendication 1, caractérisé en ce que l'on utilise en tant que résines phénoliques oxyalkylées des résines obtenues par condensation d'alkylphénols avec du formaldéhyde, une solution aqueuse de formaldéhyde ou du paraformaldéhyde, en faisant suivre d'une alcoxylation.

**4.** Procédé selon la revendication 1, caractérisé en ce que l'on utilise en tant que polymères séquencés ou copolymères de l'oxyde d'éthylène et de l'oxyde de 1,2-propylène réticulés par des diisocyanates, des acides dicarboxyliques, du formaldéhyde et/ou des éthers diglycidyliques des produits obtenus par réaction d'un polyéther difonctionnel consistant en 30 à 90 parties en poids d'oxyde de 1,2-propylène et 70 à 10 parties en poids d'oxyde d'éthylène, au poids moléculaire moyen de 2 000 à 20 000, avec un isocyanate bifonctionnel, un acide carboxylique bifonctionnel, du formaldéhyde et/ou un éther glycidylique bifonctionnel.

**5.** Procédé selon la revendication 1, caractérisé en ce que l'on utilise en tant que polyétheruréthannes des polyétheruréthannes à modification urée de formule (III)

$NH-CO-NH-R_3-[-NH-CO-O-(CHR_6-CHR_7O)_x-(CHR_8-CHR_9-O)_y-R_{10}]_m$

|

$R_1$

|

$N-CO-NH-R_4-[-NH-CO-O-(CHR_6-CHR_7O)_x-(CHR_8-CHR_9-O)_y-R_{10}]_m$

|

$R_2$

|

$NH-CO-NH-R_5-[-NH-CO-O-(CHR_6-CHR_7O)_x-(CHR_8-CHR_9-O)_y-R_{10}]_m$

(III)

dans laquelle

| | |
|---|---|
| $R_1$ et $R_2$ | représentent chacun, indépendamment l'un de l'autre, un groupe cycloalkylène en $C_2$-$C_{14}$, |
| $R_3$, $R_4$ et $R_5$ | représentent chacun, indépendamment les uns des autres un groupe alkylène, |

| | |
|---|---|
| | cycloalkylène ou arylène éventuellement substitué, |
| $R_6$, $R_7$, $R_8$ et $R_9$ | représentent chacun, indépendamment les uns des autres l'hydrogène ou un groupe alkyle en $C_1$-$C_{20}$, |
| $R_{10}$ | représente un groupe alkyle en $C_1$-$C_{18}$, aryle en $C_6$-$C_{18}$, aralkyle en $C_7$-$C_{18}$ ou alcényle en $C_2$-$C_{18}$ et |
| n | est un nombre allant de 0 à 50 |
| m | est un nombre allant de 1 à 4 |
| x | est un nombre allant de 5 à 100 et |
| y | est un nombre allant de 0 à 100. |

6. Procédé selon la revendication 1, caractérisé en ce que l'on utilise en tant que polymères de l'oxyde d'éthylène et/ou de l'oxyde de 1,2-propylène, des oxydes de polyalkylène reliés entre eux et modifiés par des amines, de formule générale (I)

$$\begin{array}{l} NH-CHR-(CH_2)_x-CHR-[-OCHR-(CH_2)_x-CHR-]_y-(OCHR-CHR)_y-O-Q-A \\ | \\ M \\ | \\ NH-CHR-(CH_2)_x-CHR-[-OCHR-(CH_2)_x-CHR-]_y-(OCHR-CHR)_y-O-Q-A \end{array} \quad (I),$$

dans laquelle

| | |
|---|---|
| les symboles R | représentent chacun, indépendamment les uns des autres, l'hydrogène ou un groupe alkyle en $C_1$-$C_{20}$, |
| les symboles x | représentent chacun, indépendamment les uns des autres, 0 ou un nombre entier allant de 1 à 12, |
| les symboles y | représentent chacun, indépendamment les uns des autres, 0 ou un nombre entier allant de 1 à 120, |
| les symboles Q | représentent chacun, indépendamment les uns des autres, un groupe arylène en $C_6$-$C_{18}$, aralkylène en $C_7$-$C_{18}$ ou alkylène en $C_2$-$C_{18}$, |
| les symboles A | représentent chacun, indépendamment les uns des autres, l'hydrogène, un groupe hydroxy ou un groupe de formule (II) |

$$-(OCHR-CHR)_y-[-OCHR-(CH_2)_x-CHR-]_y-OCHR-(CH_2)_x-CHR-NH_2 \quad (II),$$

dans laquelle R, x et Y ont les significations indiquées ci-dessus, et

M représente le radical d'un diisocyanate, d'un bisépoxyde, d'un acide dicarboxylique, d'un dihalogénure d'acide dicarboxylique, d'un anhydride d'acide biscarboxylique, d'un diester ou d'un dérivé dihalogéné après que les deux groupes réactifs ont réagi avec un atome d'hydrogène d'amine.

7. Procédé selon les revendications 1 à 6, caractérisé en ce que l'on opère à des températures dans l'intervalle de 0 à 100 °C.